# EUROPEAN PATENT APPLICATION

(11) **EP 1 662 362 A1**
(43) Date of publication of application: **31.05.2006**
(21) Application number: 05111214.2
(22) Date of filing: 24.11.2005
(51) Int. Cl.: G06F 3/00

(54) **Desk top scanning with hand gestures recognition**

(30) Priority: 26.11.2004 EP 04106116
(71) Applicant: Océ-Technologies B.V., 5914 CC Venlo (NL)
(72) Inventor: Audenaerde, Robert J., 5911 AC, Venlo (NL); De Smet, Sebastian P.R.C., 5914 PE, Venlo (NL); Nelissen, Joseph L.M., 5913 GE, Venlo (NL); Jacobs, Johannes W.M., 5995 AN, Kessel (NL)
(74) Representative: van Meeteren, Arend Anthonie

(57) **Abstract**

A desk top document scanning system in a multi-usage environment executes scanning over a field of interest and forwards results of the scanning selectively to a selected one of a plurality of scan data usage applications.

In particular, the usage application is determined by detecting a substantially steady non-pointing first manual gesture by a user person which gesture is presented at the field of interest. The system may use biometrical techniques to recognize the user person from the dimensions of the hand making the gesture and thereupon further detail the usage application selection.

Advantageously, the field of interest may be re-defined by a second manual gesture by a user person made in combination with the first manual gesture which second manual gesture is also presented at the field of interest.

## Description

### BACKGROUND OF THE INVENTION

The invention relates to a method of providing a digital document file based on a physical document, using a desk top document scanning system, said method comprising the steps of scanning over a field of interest and detecting manual gestures made by a user person, that indicate a usage of scanning results.

Prior art document US 5,511,148 discloses a feedback feature implemented in a copying environment through effecting a projection on a working plane, whilst effecting a certain manipulation by pointing and tapping with fingers on the working plane. The reference relates to the creating and processing of documents, whereas the present invention is directed to a scanning environment proper that wants to effect selecting among various different fields of usage, and thus selectively forwarding scanned data to a subsystem and/or software application associated to the selected field of usage.

US 5,732,227 discloses a hand gesture-operated system including a display surface to be used as a desktop, on which document images and so-called "actual objects" may be displayed. Actual objects designate file handling operations, such as file storage, fax processing, keyboard entry, etc., and document images may be dragged to such an object to initiate the associated operation, by an operator using hand gestures over the display surface. However, this prior art document does not disclose actual document scanning for obtaining document images. Rather, document images are generated digitally from document files and displayed to facilitate handling them under hand gesture control. In this respect, the gesture processing is much more similar to the use of a mouse/cursor on a computer screen desktop than to scanner control.

Furthermore, the present invention recognizes the high worth of intuitive manipulation on an easy-to-understand level that requires little or no critical movements from a user person.

### SUMMARY OF THE INVENTION

In consequence, amongst other things, it is an object of the present invention to effect such selecting in a straightforward and uncomplicated manner, that would enhance possibilities for using documents and the like presented on a desk top.

Now therefore, according to one of its aspects, the invention is characterized according to the characterizing part of Claim 1. The gesture is substantially steady, which means that no prescribed motion is necessary to recognize the gesture. The gesture needs not point to a particular spot such as would be the case on a preformatted form, and the operation can thus be used for any document or document-like item, such as text written on an envelope or label. The field of usage does pertain to the usage of the document as such, which may contain text, graphics, images, and other. Generally, the size is such as fitting on a desk top and therefore, rather limited, such as no larger than standard A2, but this particular size is no express limitation.

In particular, said field of interest may be re-defined by detecting a second manual gesture by a user person which second manual gesture is presented at said field of interest. To a certain extent, such detecting can imply both detecting proper and interpreting.

The invention also relates to a system that is arranged for implementing the method as claimed in Claim 1. Further advantageous aspects of the invention are recited in dependent Claims.

### BRIEF DESCRIPTION OF THE DRAWING

These and further features, aspects and advantages of the invention will be discussed more in detail hereinafter with reference to the disclosure of preferred embodiments of the invention, and in particular with reference to the appended Figures that illustrate:
- Fig. 1: (including Fig. 1a- Fig 1d), a set of gestures to be executed by a user person;
- Fig. 2,: a geometrical set-up of a scanning arrangement for use with the invention;
- Fig. 3,: the principal steps for executing the scanning steps without detailing the selection proper;
- Fig. 4,: the system operations as considered on a functional level;
- Fig. 5,: the system operations as considered from an input perspective.

### DETAILED DESCRIPTION OF PREFERRED EMBODIMENTS

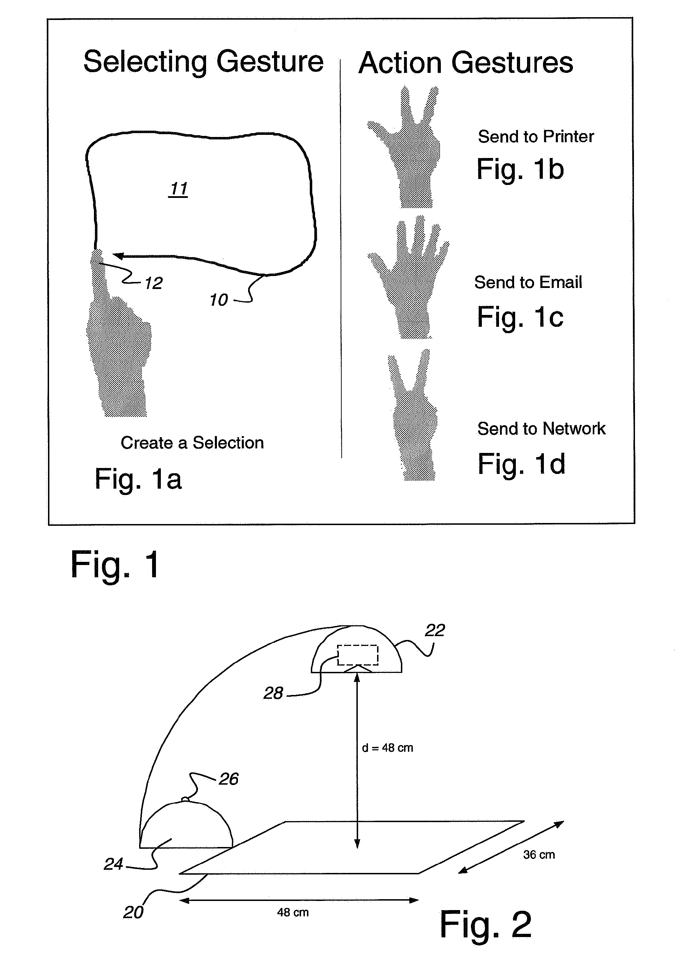

Figure 1 illustrates a set of gestures to be executed by a user person. Figure 1a shows a selecting gesture 10 that is used for selecting a field of interest 11. In this case, the gesture 10 is made by the extended right hand forefinger 12, whilst the other fingers are kept folded. As shown, the gesture movement 10delimits a very rough rectangle. The rectangle is recognized as such in the scanning system, and may then be used for being improved to a "neat" rectangle that circumscribes the finger track, and therewith the area to be used. Alternatively, the rectangle is converted to the most probable area that could be useful for processing, such as a text field as delimited by its white space borders, one or more paragraphs within a text page, a picture as separated from its background, or other. Also, other shapes could be indicated by the gesture, such as a rough circle that could be improved likewise to a "neat" rectangle, or rather, to a "neat" circle or ellipse, as depending by the software or by the image actually present on the document.

Figures 1 b-1 d illustrate action gestures (as opposed to the *selecting* gesture of Figure 1a) that are executed by extending one or more selected fingers. In the embodiment, extending the thumb and the first two fingers signals "sending to printer". Further, extending all fingers signals "sending to email". Finally, extending only the first two fingers signals "sending to network". Various other gestures would be feasible, given the number of fingers and their relatively large variations in positioning. In Figures 1 b-1 d, the gesture is recognized by the software while the hand is substantially steady; it was found that such will generally allow large tolerances in the size, shape and colour of the hand.

Alternatively to the area selection procedure as described in relation with Figure 1a, also the selection of the field of interest may also be effected by a hand pose in a substantially steady position. This presents a simple organization, wherein the recognition is effected in two successive tiers, but it allows less freedom in the selecting of the field of interest, which then could restrict to only a default format, e.g. upright A4 format. Note that Action gestures are executed within the field of interest, but some extension outside would be well tolerable.

In a practical implementation, first the area is selected (if appropriate), and thereupon the Action gesture is detected.

For a multi-page document, the first page is presented, next, the area is selected, and then a so-called "set" gesture is entered, which is formed by, e.g., four extended fingers. The two hand poses are repeated for every page. Alternatively, the area selection gesture may be left out for the succeeding pages. After the last page has been entered, the Action gesture is presented by the user. In this case, the pages are scanned after the gestures proper. However, a different sequence would well be feasible.

By itself, recognizing of the hand shape proper is well-known to persons skilled in the art. Known methods are, e.g., template matching, contour matching, Eigenface Matching, neural network application. This aspect is, however, not part of the present invention.

In a practical embodiment, the camera that is used for the scanning process generates, for instance, 12 images per second. Regarding operating parameters of this embodiment, after selecting the region of interest, at least one image of the following 10 images must be interpretable as an Action command, with a matching score of at least + 0.8 in a range from- 1 to + 1.

Selecting the region of interest needs give rise to at least five recognized locations, because such would already be sufficient for interpretation of a rectangular area.

An action gesture must in at least 8 from 10 successive images yield a matching score of 0.8 or up. The recognition must be relatively secure, because it will start executing a scanning process immediately. This is particularly important in scanning multi-page documents, since additional, erroneous, images in the sequence are annoying. Further, some motion may occur during the detecting. However, the pose itself must remain substantially unchanged. Of course, other parameters would apply to other embodiments, security level wanted, etcetera.

Figure 2 illustrates a preferred geometrical set-up of a scanning arrangement for use with the invention. As shown, the present desk top area scanned is by way of example 48 by 36 centimeters, which will usually be sufficient for most office chores. The scanning facility is realized by a digital camera 28 that is housed in a holder 22, which may also contain a lighting facility for illuminating the desk top, so that the whole assembly would resemble an office lamp. Furthermore, base element 24 will provide mechanical support, and further contain such power supply, processing facilities, and attachment as necessary to interface to external destinations for the scanned information. The base element also houses a multi-color LED indicator 26 that signals standby (green), scanning (steady red) and transferring (blinking red). Other signalling functions could be useful, but for the invention as envisaged, no full page display were necessary.

Various alternative camera locations are feasible, such as fixed to or pending from the office ceiling, etcetera.

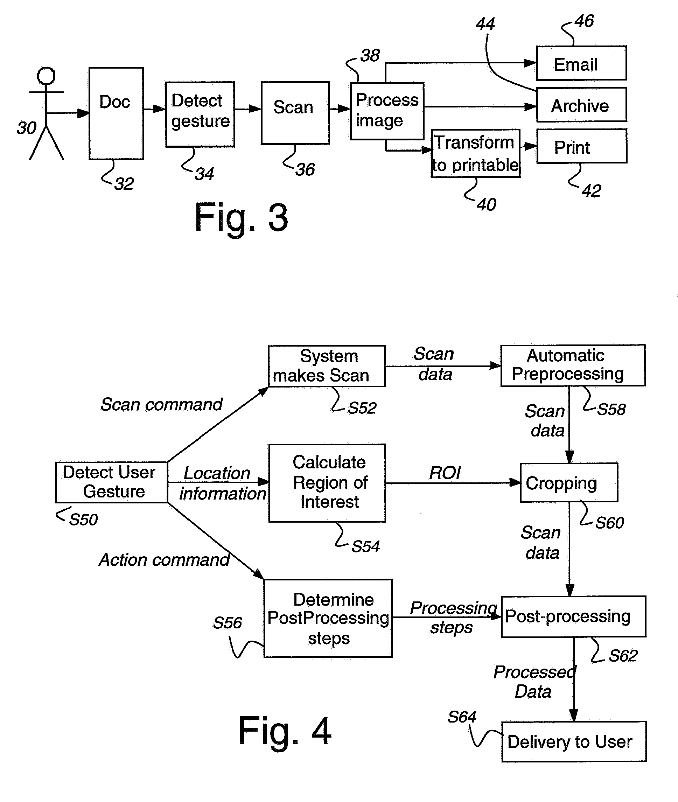

Figure 3 illustrates the principal steps for executing the scanning steps without detailing the selection proper of the various fields of usage. Here, user person 30 presents a document 32 at the scanning area and makes a gesture or a series of gestures, which are detected in step 34. The system then makes a scan 36, and by some straightforward processing the image is processed in 38 for transfer to the scan data usage application as indicated in the gestures, namely, applications for e-mail 46, archiving 44 or printing 42. For printing 42, a transform to printable 40 is often necessary.

Figure 4 illustrates the system operations as considered on a functional level. After presentation of the document, in block S50 the system detects the gestures made by the user. In the first place, this leads to a scan command, whereupon the system in block S52 executes the scanning operation. The scanning produces the scan data which in block S58 are subjected to automatic pre-processing such as thresholding, edge enhancing, correcting for barrel distortion and contrast enhancement.

Further to the executing of the gesture, the system finds the location information and calculates the region of interest, S54, possibly depending on the manner in which the gesture is executed (cf. Figure 1a, supra). After such determining, in block S60 as depending on the ROI (Region Of Interest) information, the scan data are subjected to a cropping operation in block S60, which will restrict the image to only the region of interest, whilst suppressing margin regions and the like.

In the third place, if after the location information gesture also the Action command gesture specifying the selected field of usage is entered by the user person, in block S56 any necessary post-processing steps dedicated to the selected field of usage are determined. From then on, certain postprocessing steps may follow (cf. Figure 3, supra), which will then be executed in block S62. Thereupon, the processed data are delivered to the user (data usage application) in block S64.

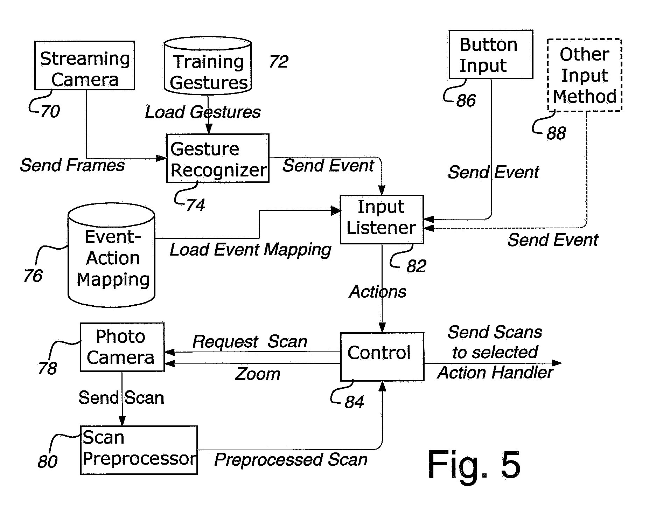

Figure 5 illustrates the system operations as considered from an input perspective. Block 70 represents a streaming camera that repeatedly sends Frames to gesture recognizer block 74. The latter may in a training phase have received from data base 72 a sequence of Training Gestures. Often, training need only be executed once and for all, so that subsequent other users may immediately start working. Upon subsequently recognizing a gesture, block 74 sends an Event signalization to Input Listener block 82. The latter has, from further data base 76, received Event-on-Action-Mapping information and may in consequence signal Actions to be executed to Central Control block 84. The latter may emit Zoom control signals and Request photo signals to Photo camera 78. Photo camera 78 may be the same as Camera 70. Upon being so activated, Camera 78 takes a photo for sending to Scan Pre-processor 80. In its turn, the Pre-processed Scan information is transferred to Central Control block 84, which thereupon sends Photos (scan files) to the Action Handler (not shown) selected by the Action signal from block 82. Further to the above, additional inputs may be given, such as by Pushbutton 86 or Other Facilities 88 such as speech. For clarity, the ultimate handling proper has not been shown in Figure 5.

In a basic embodiment of the invention, the scanner system is a personal gadget dedicated to one user. In that case, the destinations used by the e-mail and archive applications, and also for printing, may be pre-programmed as the e-mail address of the user and a dedicated directory within the user's computer system, respectively.

In a more elaborated embodiment, the scanner system may be a shared appliance in a multi-user environment. In that case, it would be preferable to include a user recognition function in the system. E.g., the scanner might be provided with a reader for, possibly remotely readable, identity cards, such as cards including an RFID tag, or with a device for recognizing biometrical characteristics, such as a fingerprint reader. Such elements could easily be incorporated in the construction of the scanner system, as already mentioned above as the Other Facilities 88. Also, an identity card may carry a machine-readable code, such as a bar code, and may be presented to the scanner, that can read it and so identify the user.

Also, and preferably, the system might be able to recognize a user by analysing the biometrical characteristics of the user's hand as a part the process of analysing the gesture. It is well-known from scientific research that hands of different persons are sufficiently different to enable identification by analysing the dimensions of fingers, phalages and knuckels, especially in limited groups of people.

In this embodiment, the system may include a pre-programmed database of users with their identifying data and their preferred scan data destinations, such as e-mail address and archiving storage locations, or a preferred printer. When a user presents his hand at the scanner field-of-view, or enters his identity data otherwise, he will automatically be recognized and his preferred scan data destination looked-up and applied.

Of course, a shared scanner may also be connected to a computer standing at its side and implementing a conventional user interface for selecting a destination.

From the above, it would be clear that the scanning procedures may be executed in various different manners. For example, the scanning proper and the two tiers of gestures may be effected in various different orders, which need not be uniform in a particular application. Furthermore, a single gesture pair may control the processing of a *sequence* of scans or pages. In such case, the pages are presented after the gestures. The page sequence may be started and terminated by specific gestures. Another specific gesture may be used as an *ignore* or cancel signal; in particular, the latter may again be a moving gesture. In principle, the number of gestures made by a single hand is relatively large, even while taking into account that various combinations are difficult or impossible for certain persons. Note that in particular the thumb has various distinctive poses possible. The gestures may be made by the right hand alone, or by either left or right hand, both hands then yielding the same or different meanings. In principle, even a two-handed gesture would be feasible, such as a cross. The colour of the hand is in particular arbitrary, but some care may have to be taken to distinguish the hand colour from the background.

Now, the present invention has hereabove been disclosed with reference to preferred embodiments thereof. Persons skilled in the art will recognize that numerous modifications and changes may be made thereto without exceeding the scope of the appended Claims. In consequence, the embodiments should be considered as being illustrative, and no restriction should be construed from those embodiments, other than as have been recited in the Claims.

## Claims

1. A method of providing a digital document file based on a physical document, using a desk top document scanning system, said method comprising the steps of scanning over a field of interest and detecting manual gestures made by a user person, that indicate a usage of scanning results,
said method being **characterized by**
- detecting in said field of interest a substantially steady non-pointing first manual gesture by a user person (Figs. 1b-1d),
- determining an intended usage application selection from said gesture,
- executing a document scanning operation within the field of interest, and
- forwarding results of said scanning operation to the selected usage application as determined from the gesture.

2. A method as claimed in Claim 1, wherein said field of interest is re-defined by detecting a second manual gesture by a user person which second manual gesture is presented at a previous field of interest (Fig 1a).

3. A method as claimed in Claim 2, wherein said second manual gesture precedes said first manual gesture.

4. A method as claimed in Claim 2 or 3, wherein said second manual gesture is a pointing motion executed by said user person.

5. A method as claimed in Claim 2 or 3, wherein said second manual gesture is a further substantially steady manual gesture by the user person, which extends said field of interest to a prespecified standardized document size that is positioned around said second manual gesture.

6. A method as claimed in Claim 1, wherein said usage application is selectable among at least email, archiving and printing applications.

7. A method as claimed in Claim 1, wherein a sequence of pages is successively scanned without presenting said first and/or second gestures for every single page during said sequence.

8. A method as claimed in Claim 1, further including a step of automatically determining a user's identity and generating control data associated to the user's identity for controlling said selected usage application.

9. A method as claimed in claim 8, wherein the selected usage application is an email application, and said control data include an email address.

10. A method as claimed in claim 8, wherein the selected usage application is an archiving application, and said control data include a file storage location.

11. A method as claimed in claim 8, wherein said step of automatically determining a user's identity includes dimensional analysis of a hand presenting the manual gesture.

12. A method as claimed in claim 8, wherein said step of automatically determining a user's identity includes reading a fingerprint or an identity card.

13. A desk top document scanning system for operating in combination with a plurality of scan data usage applications, said system comprising
a scanning facility (70, 78) for scanning over a field of interest,
a detecting facility (74), connected to said scanning facility (70), that is arranged for detecting a substantially steady first manual non-pointing gesture by a user person, which gesture is presented at said field of interest as representing said usage,
a selection determining facility (82), connected to the detecting facility (74), for determining a selection of a said usage application, based on said detected gesture, and
a forwarding facility (84) for forwarding results of scanning a document placed in the field of interest selectively to a selected one of said usage applications.

14. A system as claimed in Claim 13, wherein said detecting facility (74) is furthermore arranged for detecting a second manual gesture by a user person at said field of interest as re-defining said field of interest.

15. A system as claimed in Claim 14, wherein said detecting facility (74) is arranged to detecting said second manual gesture as preceding said first manual gesture.

16. A system as claimed in Claim 14 or 15, wherein said detecting facility (74) is arranged for finding said field of interest as being delimited by a pointing motion executed by said user person.

17. A system as claimed in Claim 14 or 15, wherein said detecting facility (74) is arranged for finding said field of interest as being delimited by a further substantially steady manual gesture by said user person, for thereupon extending to a prespecified standardized document size that is positioned around said further manual gesture.

18. A system as claimed in Claim 13, furthermore being provided with a visual feedback facility (26) for indicating a state of said system.

19. A system as claimed in Claim 13, and furthermore allowing successively scanning a sequence of pages to be processed without necessity to further receive said first and/or second gestures during said sequence.

20. A system as claimed in Claim 13, and having a gesture training state.

21. A system as claimed in Claim 13, and furthermore allowing detecting of an Ignore or Cancel gesture.

22. A system as claimed in Claim 13, further including a module for automatically determining a user's identity, wherein the selection determining facility (82) is adapted for generating control data associated to the user's identity for controlling said selected usage application.

23. A method as claimed in claim 22, wherein the selected usage application is an email application, and said selection determining facility (82) generates an associated email address.

24. A method as claimed in claim 22, wherein the selected usage application is an archiving application, and said selection determining facility (82) generates an associated file storage location.

25. A method as claimed in claim 22, wherein said module for automatically determining a user's identity includes a module for dimensional analysis of a hand presenting the manual gesture.

26. A method as claimed in claim 22, wherein said module for automatically determining a user's identity includes a module (88) for reading a fingerprint or an identity card.
